# EUROPEAN PATENT APPLICATION

(11) **EP 4 761 096 A1**
(43) Date of publication of application: **17.06.2026**
(21) Application number: 24220362.8
(22) Date of filing: 16.12.2024
(51) Int. Cl.: H02P 1/40, H02P 6/22, H02P 23/24

(54) **MOTOR STEERING CHANGER AND DIGITAL CONTROL MOTOR HAVING THE MOTOR STEERING CHANGER**

(71) Applicant: Yen Shen Electric Ind. Co., Ltd., Taichung City 420085 (TW)
(72) Inventor: SU, Sam, Taichung City 420085 (TW); SU, Ta-Chun, Taichung City 420085 (TW); WU, Shu-Ling, Taichung City 406012 (TW)
(74) Representative: Straus, Alexander

(57) **Abstract**

A motor steering changer, to be electrically connected to a digital control motor, includes: a wiring unit having a first contact and a second contact; and a switching unit having an AC contact, a determination contact, a control end and an electrical control switch. Electrically connecting the determination contact to the first contact causes the control end to controllably cause the electrical control switch to cause a closed circuit and thus connection, allows a single-phase controller on the digital control motor to receive positive power signals, and causes the single-phase controller to controllably cause the digital control motor to undergo clockwise rotation. Electrically connecting the determination contact to the second contact causes the control end to controllably cause the electrical control switch to cause an open circuit and thus disconnection, and causes the single-phase controller to controllably cause the digital control motor to undergo counter-clockwise rotation.

## Description

### BACKGROUND OF THE INVENTION

### 1. Field of the Invention

The present disclosure relates to digital control motors, and more particularly to a motor steering changer capable of being easily connected to AC power and being easily operated to switch between clockwise rotation and counter-clockwise rotation, and a digital control motor having the motor steering changer.

### 2. Description of Related Art

Conventional single-phase induction motors are each mainly connected to the live wire (L) and neutral wire (N) of AC utility power, and their clockwise rotation and counter-clockwise rotation are controlled with a changeover switch. Conventional single-phase induction motors are easy to connect and operate, and thus they are in wide use among the industrial sector. However, conventional single-phase induction motors have drawbacks as follows: low driving efficiency, low efficiency of conversion of electrical energy and kinetic energy, high Ampere values during power consumption, and unable to change frequency or attain continuously variable speed. As a result, conventional single-phase induction motors are usually used in situations where neither sophisticated operation nor high efficiency is required.

At present, conventional digital control motors, for example, servomotors, exhibit high efficiency of conversion of electrical energy and kinetic energy and low Ampere values during power consumption, can change frequency or attain continuously variable speed, and have high driving efficiency. However, existing conventional digital control motors have drawbacks as follows: require complicated installation; require users to learn related control techniques, including performing related configuration of ports on their controllers, in order to exercise effective control; required complicated operation.

At present, motors having both the aforesaid advantages of single-phase induction motors and the aforesaid advantages of digital control motors are not available. Therefore, it is imperative to provide a digital control motor that has the aforesaid advantages of single-phase induction motors.

### BRIEF SUMMARY OF THE INVENTION

It is an objective of the disclosure to provide a motor steering changer and a digital control motor having the motor steering changer such that the digital control motor is easy and convenient to install and can be easily operated in the same way as single-phase induction motors, i.e., directly switched between clockwise rotation and counter-clockwise rotation with a switching unit.

To achieve the above and other objectives, the disclosure provides a motor steering changer, mountable on a digital control motor, the digital control motor having a single-phase controller, the single-phase controller having a first pin. The motor steering changer is electrically connected to the first pin to control clockwise rotation and counter-clockwise rotation of the digital control motor. The motor steering changer comprises: a wiring unit having a first contact and a second contact for connecting to a live wire (L) and a neutral wire (N) of external AC utility power; a switching unit having an AC contact, a determination contact, a control end and an electrical control switch, the AC contact being electrically connected to the first contact, the electrical control switch having a positive power contact and an external contact, the external contact being electrically connected to the first pin of the single-phase controller, the positive power contact being connected to a positive power, the electrical control switch being controlled by the control end to cause a closed circuit or an open circuit; wherein the determination contact is selectively electrically connected to the first contact or the second contact, electrically connecting the determination contact to the first contact allows the control end to controllably cause the electrical control switch to cause a closed circuit and thus connection, and cause the positive power to connect to the first pin, the single-phase controller to controllably cause the digital control motor to undergo clockwise rotation, and electrically connecting the determination contact to the second contact allows the control end to controllably cause the electrical control switch to cause an open circuit and thus disconnection, the single-phase controller to controllably cause the digital control motor to undergo counter-clockwise rotation.

The disclosure further provides a digital control motor having the motor steering changer, comprising: a motor body; a single-phase controller disposed in the motor body and adapted to control operation of the motor body; and the motor steering changer disposed in the motor body. The way of connecting the motor steering changer and constituent components thereof are described above and thus are not reiterated for the sake of brevity.

The disclosure provides a motor steering changer and a digital control motor having the motor steering changer. The digital control motor is easy and convenient to install and can be easily operated in the same way as single-phase induction motors, i.e., directly switched between clockwise rotation and counter-clockwise rotation with a switching unit.

### BRIEF DESCRIPTION OF THE SEVERAL VIEWS OF THE DRAWINGS

FIG. 1 is a block diagram for the first preferred embodiment of the disclosure.
FIG. 2 is a schematic view for the first preferred embodiment of the disclosure.
FIG. 3 is a block diagram for another aspect of the first preferred embodiment of the disclosure.
FIG. 4 is a block diagram for the second preferred embodiment of the disclosure.
FIG. 5 is a block diagram for another aspect of the disclosure.

### DETAILED DESCRIPTION OF THE INVENTION

Technical features of the disclosure are herein illustrated with preferred embodiments, depicted with drawings, and described below.

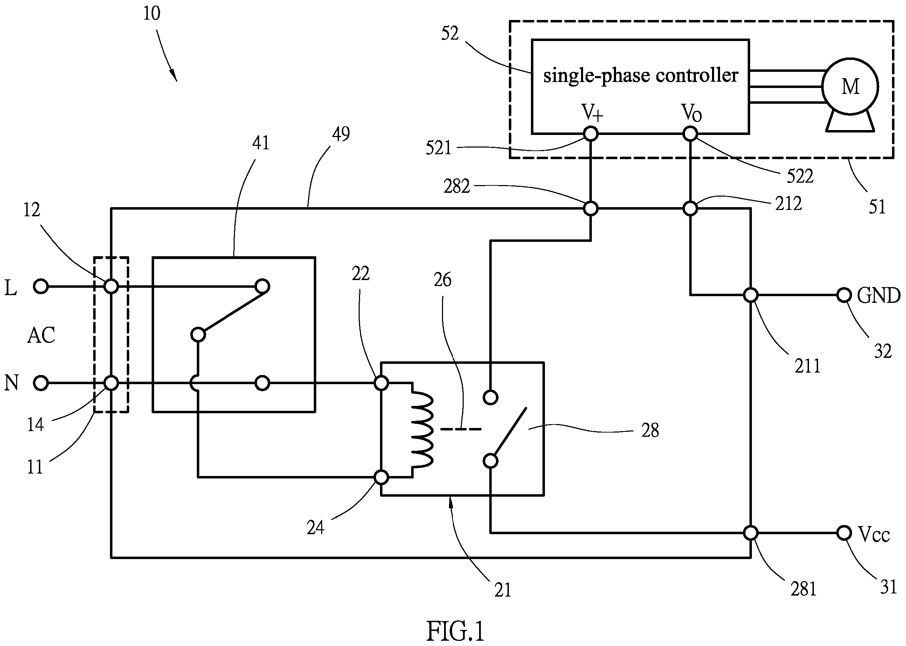

As shown in FIG. 1, the first preferred embodiment of the disclosure provides a motor steering changer 10 mountable on a digital control motor 51. The digital control motor 51 has a single-phase controller 52. The single-phase controller 52 has a first pin 521. The motor steering changer 10 is electrically connected to the first pin 521 to control clockwise rotation and counter-clockwise rotation of the digital control motor 51. The motor steering changer 10 essentially comprises a wiring unit 11 and a switching unit 21.

The digital control motor 51 is a commercially-available, conventional servomotor, reluctance motor, stepper motor, synchronous motor and permanent-magnet motor, or any other conventional motor whose operation is subjected to digital control.

The wiring unit 11 has a first contact 12 and a second contact 14 for connecting to a live wire (L) and a neutral wire (N) of external AC utility power respectively. The first preferred embodiment of the disclosure is not restricted to connecting the first contact 12 and the second contact 14 to the live wire or the neutral wire. In the first preferred embodiment, the wiring unit 11 can be a plug or a junction box.

The switching unit 21 has an AC contact 22, a determination contact 24, a control end 26 and an electrical control switch 28. The AC contact 22 is electrically connected to the first contact 12. The electrical control switch 28 has a positive power contact 281 and an external contact 282. The external contact 282 is electrically connected to the first pin 521 of the single-phase controller 52. The positive power contact 281 is connected to a positive power 31. The electrical control switch 28 is controlled by the control end 26 to cause a closed circuit or an open circuit. In the first embodiment, the positive power 31 is provided by the single-phase controller 52 and thus can provide high-potential electrical energy, for example, +5V, +12V or +24V. In the first embodiment, the AC contact 22, the determination contact 24, the control end 26 and the electrical control switch 28 of the switching unit 21 are integrated to form one relay for exemplary sake, and the control end 26 is an electromagnet inside the relay.

The determination contact 24 is selectively electrically connected to the first contact 12 or the second contact 14. Electrically connecting the determination contact 24 to the first contact 12 allows the control end 26 to controllably cause the electrical control switch 28 to cause a closed circuit and thus cause a closed circuit to be formed between the positive power 31 and the first pin 521, allowing the single-phase controller 52 to controllably cause the digital control motor 51 to undergo clockwise rotation. Electrically connecting the determination contact 24 to the second contact 14 allows the control end 26 to controllably cause the electrical control switch 28 to cause an open circuit and thus disconnection, allowing the single-phase controller 52 to controllably cause the digital control motor 41 to undergo counter-clockwise rotation.

In the first embodiment, a selection switch 41 is electrically connected to the first contact 12, the second contact 14 and the determination contact 24 as needed and adapted to switch between a first state and a second state. In the first state, the determination contact 24 is electrically connected to the first contact 12. In the second state, the determination contact 24 is electrically connected to the second contact 14. If the selection switch 41 is dispensed with, it will be feasible to manually (for example, using a connection board) change the way of connecting the determination contact 24. The selection switch 41 has advantages as follows: convenient, and either manually operable or electronically controllable.

In the first embodiment, the wiring unit 11 and the switching unit 21 are disposed in a casing 49, whereas the first contact 12, the second contact 14, the positive power contact 281 and the external contact 282 are exposed from the casing 49 in order to be electrically connected to other devices conveniently. The selection switch 41 may also be disposed in the casing 49. The casing 49 advantageously facilitates a manufacturing process and enables positions of electrical connection to be easily discerned to facilitate an assembly process.

The single-phase controller 52 further has a second pin 522. The switching unit 21 further has a zero potential contact 211 and a passage contact 212. The zero potential contact 211 and the passage contact 212 are electrically connected. The zero potential contact 211 is electrically connected to an external zero potential reference point 32. The passage contact 212 is electrically connected to the second pin 522. The zero potential reference point 32 may also be provided by the single-phase controller 52 or by any other available ground end. Optionally, the second pin 522 allows the positive power 31 of the first pin 521 to have a relative zero potential for reference. In a variant embodiment of the disclosure, zero potential reference will be feasible to enable normal functionality even if the second pin 522 is dispensed with.

The technical features in the first embodiment are described above. The operation in the first embodiment is described below.

As shown in FIG. 1, in the first state, the wiring unit 11 is electrically connected to external AC utility power, and the determination contact 24 is electrically connected to the first contact 12. At this point in time, electrical current flows from the first contact 12 to the second contact 14 via the determination contact 24, and thus the control end 26 controllably causes the electrical control switch 28 to cause a closed circuit and causes the positive power 31 to connect to the first pin 521. At this point in time, the single-phase controller 52 receives high-potential signals through the first pin 521 and determines that the clockwise rotation must be controlled, controllably causing the digital control motor 51 to undergo clockwise rotation.

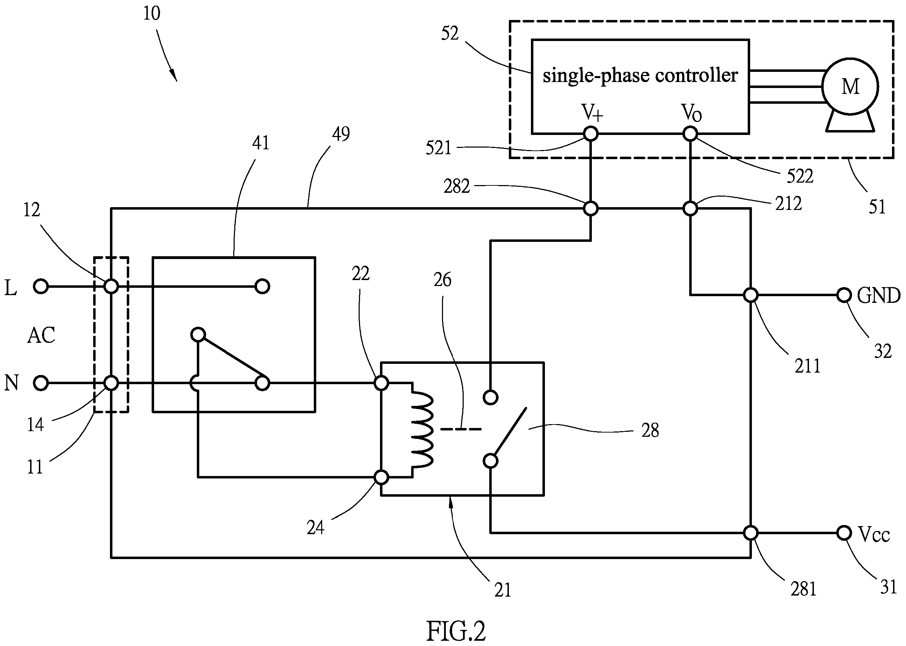

As shown in FIG. 2, when the user switches the selection switch 41 and thus switches to the second state, the determination contact 24 is switched to be electrically connected to the second contact 14, i.e., in the second state. At this point in time, electrical current cannot flow from the first contact 12 to the second contact 14 via the determination contact 24, and thus the control end 26 controllably causes the electrical control switch 28 to cause an open circuit, allowing the positive power 31 not to connect to the first pin 521. At this point in time, the first pin 521 of the single-phase controller 52 does not receive high-potential signals and determines that counter-clockwise rotation must be controlled, causing the digital control motor 51 to undergo counter-clockwise rotation.

Therefore, the user only needs to switch the selection switch 41 or change the object to be connected to the determination contact 24, i.e., switching to the first state or the second state to allow the digital control motor 51 to undergo clockwise rotation or counter-clockwise rotation. The installation process merely entails electrically connecting the first contact 12 and the second contact 14 of the motor steering changer 10 to external AC utility power, electrically connecting the positive power contact 281 to the positive power 31, and electrically connecting the external contact 282 to the first pin 521 of the single-phase controller 52, or, in short, connecting to a power source and connecting to the single-phase controller 52. Therefore, in the first embodiment, the digital control motor 51 is easy to install and can be easily operated in the same way as single-phase induction motors, i.e., directly switched between clockwise rotation and counter-clockwise rotation with the switching unit 21.

From another user perspective, users can buy the digital control motor 51 and then install and operate it in the same way as single-phase induction motors, dispensing with the process of learning how to use servomotors and resultant hassles. Users can intuitively perceive the advantages of single-phase induction motors in terms of installation and operation and the advantages of the digital control motor 51 in terms of performance, which are not achievable by the existing prior art. Furthermore, according to the disclosure, the first contact 12, the second contact 14 and the determination contact 24 are directly connected to external AC utility power to determine the first state or the second state, achieving ease of connection and dispensing with a voltage changing circuit.

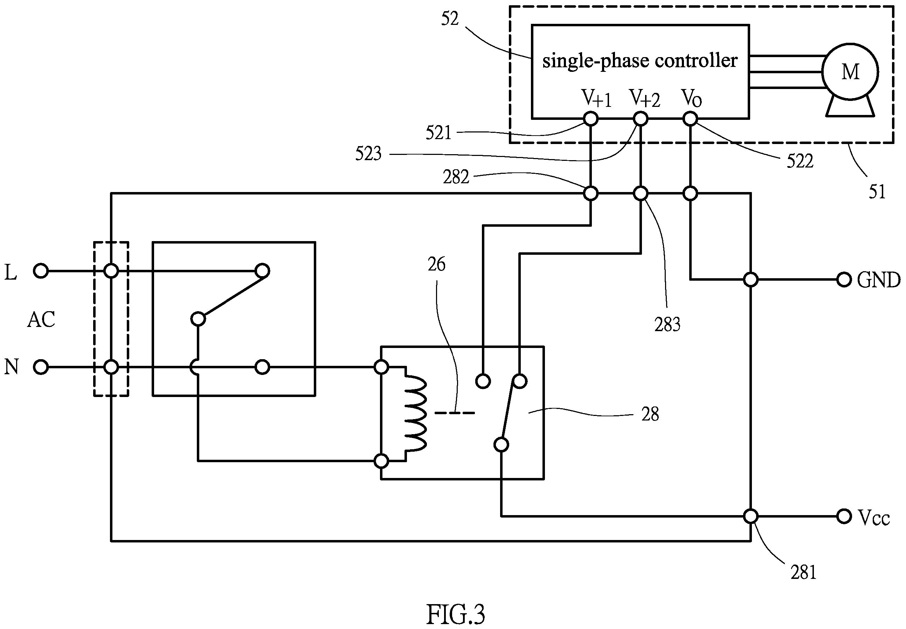

As shown in FIG. 3, the single-phase controller 52 has a third pin 523 in addition to the first pin 521 and the second pin 522, and the electrical control switch 28 has a second external contact 283 in addition to the positive power contact 281 and the external contact 282. The control end 26 controllably causes the electrical control switch 28 to switch to cause the positive power contact 281 to create a closed circuit ending at the external contact 282 but an open circuit ending at the second external contact 283, or cause the positive power contact 281 to create an open circuit ending at the external contact 282 but create a closed circuit ending at the second external contact 283, switching between the aforesaid two states. Therefore, the single-phase controller 52 has two different types of switch selection and thus can control clockwise rotation and counter-clockwise rotation of the digital control motor 51 in the two switch states. This embodiment illustrates that the electrical control switch 28 can work selectively through a two-way switching mode but is not restricted to the aforesaid one-way switching mode shown in FIG. 1.

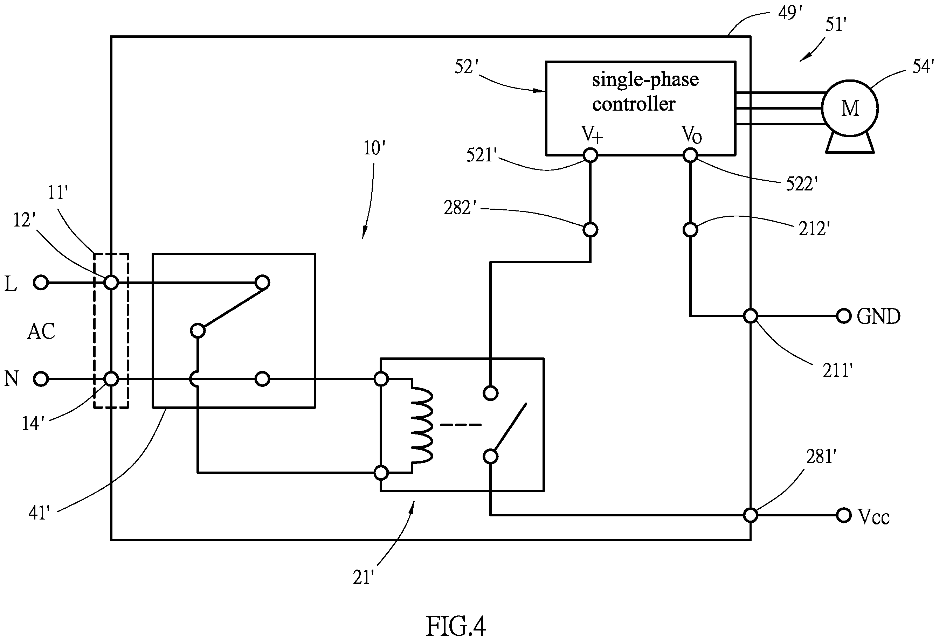

As shown in FIG. 4, the second preferred embodiment of the disclosure provides a digital control motor 51' having the aforesaid motor steering changer. The digital control motor 51' essentially comprises a motor body 54', a single-phase controller 52', and the motor steering changer 10' disclosed in the first embodiment, as described below.

The single-phase controller 52' is disposed at the motor body 54' and adapted to control the operation of the motor body 54'.

The structural features of the motor steering changer 10', the way of connecting the motor steering changer 10' to the single-phase controller 52', and the way of connecting the motor steering changer 10' to external AC utility power in the second preferred embodiment are identical to their counterparts in the first preferred embodiment.

In the presence of the casing 49', it is feasible for the wiring unit 11', the switching unit 21', the selection switch 41' and the single-phase controller 52' to be integrated with each other and thus disposed in the casing 49'. Both the first contact 12' and the second contact 14' are exposed from the casing 49'. The first pin 521', the second pin 522', the positive power contact 281', the zero potential contact 211', the external contact 282' and the passage contact 212' are disposed in the casing 49'.

Further distinguishing technical features of the second preferred embodiment are described below. The single-phase controller 52' and the motor steering changer 10' are integrated with each other and disposed on the digital control motor 51'. In a perspective view, the motor steering changer 10' is disposed in the single-phase controller 52', and thus users do not perceive them as two different units or devices. The product bought by the users is the digital control motor 51' having the motor steering changer 10' disposed in the single-phase controller 52' and thus having the aforesaid advantages achievable by the first preferred embodiment.

The operation features and achievable advantages of the second preferred embodiment are disclosed in the first preferred embodiment and thus are not reiterated for the sake of brevity.

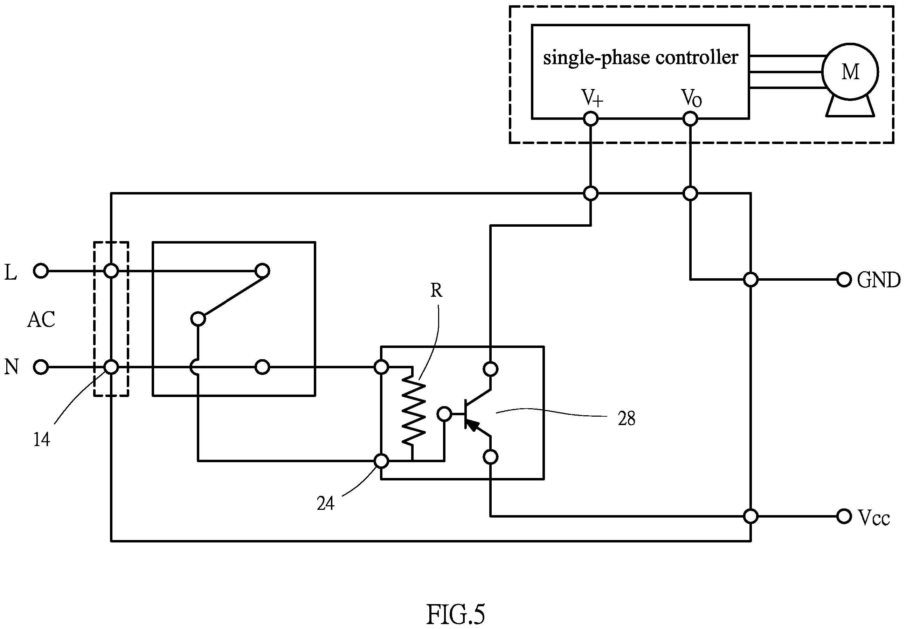

In the first preferred embodiment, the switching unit 21 can be integrated with one relay. However, as shown in FIG. 5, a resistance R has two ends electrically connected to the determination contact 24 and the second contact 14, and a transistor (for example, a field-effect transistor) functions as the electrical control switch 28 electrically connected to the resistance R, also achieving the advantage of switching between the first state and the second state to cause the electrical control switch 28 to create a closed circuit or an open circuit. Therefore, the electrical control switch 28 can be a conventional switch having the aforesaid advantages and still falling within the scope of the appended claims of the disclosure.

The disclosure is disclosed above by preferred embodiments. However, persons skilled in the art should understand that the embodiments are illustrative of the disclosure only, but shall not be interpreted as restrictive of the scope of the disclosure. Please note that all simple variations made to the embodiments or equivalent implementation thereof according to the claims of the disclosure shall be deemed falling within the scope of the claims of the disclosure.

## Claims

1. A motor steering changer, mountable on a digital control motor, the digital control motor having a single-phase controller, the single-phase controller having a first pin, the motor steering changer being electrically connected to the first pin to control clockwise rotation and counter-clockwise rotation of the digital control motor, the motor steering changer comprising:
a wiring unit having a first contact and a second contact for connecting to a live wire (L) and a neutral wire (N) of external AC utility power; and
a switching unit having an AC contact, a determination contact, a control end and an electrical control switch, the AC contact being electrically connected to the first contact, the electrical control switch having a positive power contact and an external contact, the external contact being electrically connected to the first pin of the single-phase controller, the positive power contact being connected to a positive power, and the control end controllably causing the electrical control switch to cause a closed circuit or an open circuit,
wherein the determination contact is selectively electrically connected to the first contact or the second contact, and electrically connecting the determination contact to the first contact allows the control end to controllably cause the electrical control switch to cause a closed circuit and thus connection, and thus cause the positive power to connect to the first pin, allowing the single-phase controller to controllably cause the digital control motor to undergo clockwise rotation, and electrically connecting the determination contact to the second contact allows the control end to controllably cause the electrical control switch to cause an open circuit and thus disconnection, allowing the single-phase controller to controllably cause the digital control motor to undergo counter-clockwise rotation.

2. The motor steering changer of claim 1, further comprising a casing, allowing the wiring unit and the switching unit to be disposed in the casing, and allowing the first contact, the second contact, the positive power contact and the external contact to be exposed from the casing.

3. The motor steering changer of claim 2, wherein the single-phase controller has a second pin, and the switching unit further comprises a zero potential contact and a passage contact, the zero potential contact being electrically connected to the passage contact and being electrically connected to an external zero potential reference point, and the passage contact being electrically connected to the second pin.

4. The motor steering changer of claim 3, wherein the positive power and the zero potential reference point are provided by the single-phase controller.

5. The motor steering changer of claim 1, further comprising a selection switch disposed in the casing, electrically connected to the first contact, the second contact and the determination contact, and adapted to switch between a first state and a second state, the determination contact being electrically connected to the first contact in the first state, and to the second contact in the second state.

6. A digital control motor having the motor steering changer of claim 1, comprising:
a motor body;
a single-phase controller disposed in the motor body and adapted to control operation of the motor body;and
the motor steering changer recited in claim 1 and disposed at the motor body.

7. The digital control motor of claim 6, further comprising a casing, allowing the wiring unit, the switching unit and the single-phase controller to be disposed in the casing, allowing the first contact, the second contact, the positive power contact and the external contact to be exposed from the casing, allowing the wiring unit, the switching unit and the single-phase controller to be disposed in the casing, allowing the first contact and the second contact to be exposed from the casing, and allowing the first pin, the positive power contact and the external contact to be disposed in the casing.

8. The digital control motor of claim 7, wherein the single-phase controller has a second pin, and the switching unit further comprises a zero potential contact and a passage contact, the zero potential contact being electrically connected to the passage contact and being electrically connected to an external zero potential reference point, and the passage contact being electrically connected to the second pin, wherein the second pin, the zero potential contact and the passage contact are disposed in the casing.

9. The digital control motor of claim 8, wherein the positive power and the zero potential reference point are provided by the single-phase controller.

10. The digital control motor of claim 6, further comprising a selection switch disposed in the casing, electrically connected to the first contact, the second contact and the determination contact, and adapted to switch between a first state and a second state, with the determination contact being electrically connected to the first contact in the first state, and to the second contact in the second state.
